# FASCICULE DE BREVET EUROPEEN

(11) **EP 0 323 334 B1**
(45) Date de publication et mention de la délivrance du brevet: **17.02.1993**
(21) Numéro de dépôt: 88403307.7
(22) Date de dépôt: 23.12.1988
(51) Int. Cl.: B60N 2/26, B60R 22/10

(54) **Dispositif pour la fixation de sécurité d'un siège auto enfant sur une banquette arrière de véhicule automobile**
Vorrichtung zur Sicherungsbefestigung eines Kinderautositzes auf der hinteren Sitzbank eines Kraftfahrzeuges
Apparatus for the safe attachment of an infant's vehicle seat to the rear seat of an automotive vehicle

(30) Priorité: 24.12.1987 FR 8718185
(43) Date de publication de la demande: 05.07.1989
(73) Titulaire: BABY RELAX Société en nom collectif, F-75008 Paris (FR)
(72) Inventeur: Deloustal, Bernard Roger, F-64600 Anglet (FR)
(74) Mandataire: Brycman, Jean

(56) Documents cités:
- DE-A- 1 937 610
- FR-A- 2 602 409
- US-A- 3 922 035
- US-A- 4 339 149
- US-A- 4 591 208

## Description

La présente invention concerne un dispositif pour la fixation de sécurité d'un siège auto enfant sur une banquette arrière de véhicule automobile.

Lorsque les véhicules automobiles ne possédaient pas, à la sortie d'usine, de ceintures de sécurité pour la banquette arrière, ils comportaient cependant des points d'attache sur lesquels des ceintures de sécurité pouvaient être installées par la suite par l'utilisateur d'un tel véhicule.

Un tel dispositif connu permet alors d'attacher sur ces points un siège auto enfant. Le siège comporte une coque faisant corps avec un piètement de support conformé partiellement au moins en V dont la branche sensiblement horizontale est destinée à reposer sur l'assise de la banquette, tandis que la branche sensiblement verticale de ce piètement et le dos de la coque sont appliqués contre le dossier de la banquette. Le dispositif de sécurité comprend notamment deux sangles fixées auxdits points et dont les extrémités libres sont engagées pour permettre leur réglage en longueur, dans des passants doubles faisant corps avec des pattes à oeilletons. Au moment de l'installation du siège auto enfant, les sangles sont introduites dans le passage ménagé entre la coque et le piètement et leurs pattes sont emboîtées et fixées sur un goujon de la branche horizontale précitée du piètement.

Ce dispositif connu nécessite la fixation à demeure de sangles spéciales, ce qui s'oppose à l'installation de ceintures de sécurité sur la banquette arrière lorsque celle-ci en était exempte à la livraison du véhicule. De toute façon, il ne peut plus être installé maintenant, dès lors que les véhicules sont livrés avec des ceintures de sécurité à l'arrière. Pour les véhicules anciens, le montage de ce siège auto enfant est relativement long et malcommode. En outre, la fixation n'empêche pas le basculement vers l'avant du siège par pivotement autour de l'axe des sangles.

Un autre dispositif connu par DE-A-1 937 610, correspondant au préambule de la revendication 1, met à profit la ceinture de sécurité de la banquette arrière du véhicule située du côté choisi. Dans un tel dispositif où un siège proprement dit fait corps avec un piètement support, la sangle sous-abdominale et la sangle baudrier de la ceinture, ces sangles étant à enrouleur auto-bloquant, traversent un passage ménagé entre le siège proprement dit et le piètement, de telle sorte que, lorsque le pène coulissant sur la ceinture à la limite des deux sangles est verrouillé dans la boucle attachée au véhicule, ces sangles s'appuient respectivement sur la partie sensiblement horizontale du piètement et contre le haut du bord de la partie sensiblement verticale dudit piètement opposé à ladite boucle et près du siège proprement dit. Ainsi, le basculement vers l'avant se trouve empêché.

Par contre, cet autre dispositif connu présente l'inconvénient d'une grande mobilité latérale. Dans les virages, le siège enfant se déplace sur la banquette, ce qui donne aux parents une impression d'insécurité, à l'enfant une sensation d'instabilité et au passager voisin une gêne sensible. De toute façon, le siège tend à revenir vers le milieu d'une place arrière et il n'est par conséquent pas possible de choisir l'emplacement exact de ce siège.

Par ailleurs, du fait que la sangle baudrier coopère avec un enrouleur, elle peut se dévider sous l'effet de sollicitations faibles, c'est-à-dire bien moins importantes que celles résultant d'un choc et pour lesquelles l'enrouleur se bloque. En raison de cet éventuel dévidement, la mobilité latérale précitée se trouve accentuée et peut s'accompagner de soulèvement localisé lorsque l'enfant remue.

La présente invention a pour but de s'opposer à toute mobilité latérale du siège enfant et de fixer ce siège en n'importe quelle position sur la banquette à la volonté de celui qui l'installe. Elle vise concomitamment à empêcher que le siège enfant se soulève légèrement de la banquette lorsque la sangle baudrier tend à se dérouler sous l'effet d'une sollicitation faible.

Pour atteindre ce but, le dispositif de l'invention coopère, comme le deuxième dispositif connu précité, avec une ceinture de sécurité du véhicule et, conformément à l'invention, une pince ouvrante est fixée le long d'une traverse postérieure basse du piètement pour prendre la sangle sous-abdominale et la bloquer après positionnement latéral correct du siège sur la banquette, la fixation de ladite pince étant réglable afin de s'adapter aux différentes configurations de ceintures des véhicules.

Le Brevet US-A-3 922 035 décrit un siège enfant dont une traverse postérieure basse de son piètement est munie d'un système à pince pour fixer une sangle sousabdominale en deux morceaux d'une ceinture. Ces deux morceaux sont eux-mêmes fixés aux points d'attache du plancher du véhicule automobile, mais sans enrouleur auto-bloquant. Dès lors que la sangle ne peut pas se détendre, le siège enfant est et reste parfaitement immobile.

Un système à pince pour fixer à l'aide d'une sangle sous-abdominale un siège d'enfant sur une banquette est également montré dans US-A-4 339 149. Dans ce document, toutefois, la pince ou de préférence les pinces sont placées sur les montants verticaux du piètement et non sur une traverse postérieure basse de celui-ci.

Le brevet US-A-4 591 208 décrit un siège enfant dont les accoudoirs sont reliés par un pont de maintien. La sangle sous-abdominale passe sur ce pont et une fois serrée est fixée au moyen d'un système à pince monté sur ledit pont. Etant donné que les extrémités de la sangle sont elles-mêmes fixées aux points d'attache du plancher du véhicule automobile sans l'intermédiaire d'un enrouleur auto-bloquant, le siège enfant est et reste parfaitement immobile.

Le brevet français FR-A-2 602 409 publié le 12 Février 1988, décrit une armature de siège enfant qui est maintenue en place sur la banquette d'un véhicule automobile par la sangle sous-abdominale et la sangle baudrier de la ceinture passager de cette banquette. Ces sangles sont fixées aux points d'attache du plancher de ce véhicule sans l'assistance d'un enrouleur autobloquant. Dès lors que la sangle baudrier est fixée sur la traverse postérieure haute de l'armature, le siège enfant est positionné en haut mais sa base peut se déplacer latéralement.

Ledit document montre que le pincement d'une sangle de la ceinture n'a été préconisé que pour une ceinture fixe et non pour une ceinture à enrouleur. En effet, la ceinture à enrouleur était connue lorsque le brevet français FR-A-2 602 409 a été déposé et pourtant elle a été exclue de la protection.

Par ailleurs, selon l'invention, une deuxième pince peut être prévue pour prendre la sangle baudrier au-dessus du pène.

Suivant une forme de réalisation, la deuxième pince est indépendante du siège, mais attachée à celui-ci par un lien pour être imperdable et inséparable.

Suivant une autre forme de réalisation, la deuxième pince est en deux exemplaires montés sur les côtés de la branche sensiblement verticale du piètement, près de la coque.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :
- la figure 1 est une perspective montrant, en vue arrière, un siège auto enfant monté sur la banquette arrière d'un véhicule, maintenu en place pour l'une des ceintures de sécurité arrière et fixé au moyen du dispositif de l'invention,
- les figures 2 et 3 sont des vues analogues à la figure 1 illustrant deux variantes de réalisation du dispositif.
- la figure 4 est une élévation latérale d'une pince mise en oeuvre dans le dispositif,
- la figure 5 est une vue de dessus prise suivant la ligne V-V de la figure 4,
- la figure 6 est une vue en bout prise suivant la ligne VI-VI de la figure 4,
- la figure 7 est une coupe prise suivant la ligne VII-VII de la figure 4 avec, en trait mixte, la fixation sur un méplat postérieur du piètement et sur un tube ascendant dudit piètement.

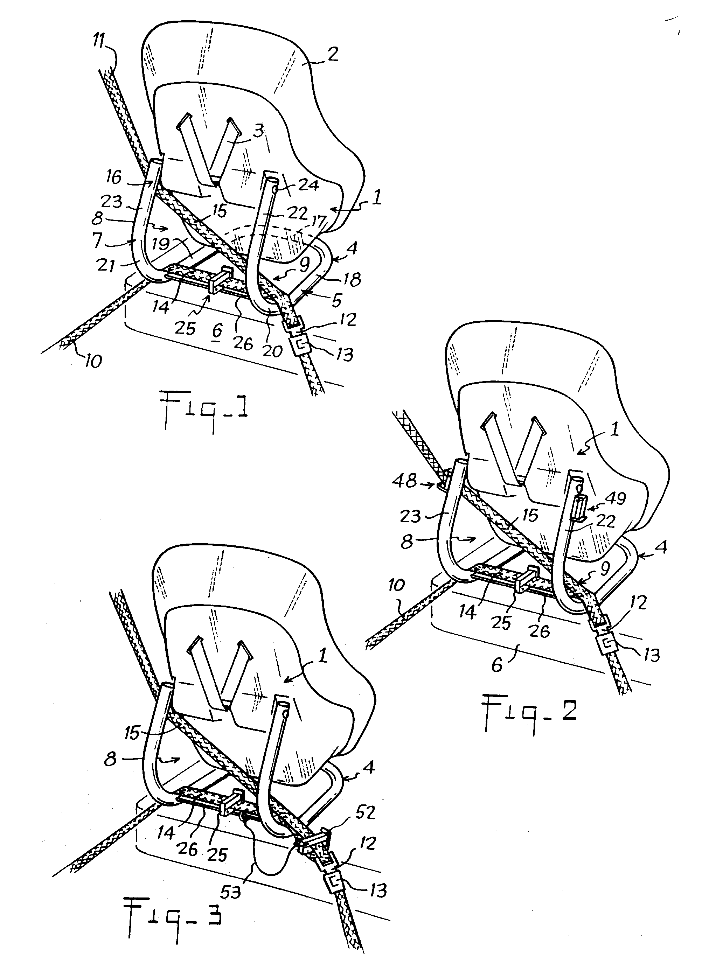

Ainsi que le montre la figure 1, le siège auto enfant comporte une coque 1 en matière plastique armée munie d'un revêtement confortable 2 pour recevoir l'enfant et d'un harnais de sécurité 3 pour l'y maintenir en place.

La coque 1 fait corps avec un piètement 4. La piètement 4 présente la forme générale d'un V dont une branche 5 sensiblement horizontale est destinée à reposer sur l'assise de la banquette 6 du véhicule et dont une branche 7 sensiblement verticale est destinée à s'appuyer en coopération avec le dos de la coque contre le dossier, non représenté de ladite banquette. Un passage 8 est ménagé entre la coque 1 et le piètement 4 pour être traversé, de la manière décrite dans ce qui suit, par la ceinture de sécurité 9 du véhicule. Cette ceinture 9 est d'un seul morceau ; l'une de ses extrémités 10 est fixée à un point d'attache du véhicule, tandis que son autre extrémité 11 coopère avec un enrouleur autobloquant porté par ledit véhicule. Sur la ceinture est monté coulissant un pène 12 susceptible d'être verrouillé dans une boucle 13 attachée à un autre point du véhicule. Dans cette position de verrouillage, la ceinture 9 traverse le passage 8 et présente, de part et d'autre du pène 12, une sangle sous-abdominale 14 et une sangle baudrier 15 ; la sangle sous-abdominale 14 s'appuie sur la branche d'assise 5 du piètement et la sangle baudrier 15 s'appuie dans l'angle 16 qui est opposé au pène 12 et que forme le haut de la branche dorsale 7 du piètement et la coque 1.

Dans l'exemple représenté, le piètement 4 est monolithique et exécuté par cambrage d'un tube métallique. La branche d'assise 5 est constituée par une partie conformée en U dont l'élément médian 17 est situé à l'avant et dont les éléments latéraux 18, 19 sont cambrés en V pour former, au-delà de coudes 20, 21, des éléments ascendants inclinés 22, 23 constituant la branche dorsale 7. Les extrémités libres hautes de ces éléments ascendants sont fixées, par tous moyens appropriés 24, à une armature métallique intégrée de la coque 1, non visible sur le dessin.

En raison de cette conformation, lorsque la branche 5 repose sur l'assise 6 de la banquette, le piètement 4 bute par ses coudes 20, 21 contre le dossier de la banquette et le dos de la coque 1 contre ledit dossier.

Dans cet exemple, la sangle sous abdominale 14 s'appuie sur les éléments tubulaires latéraux 18, 19 du piètement et la sangle baudrier 15 dans l'angle supérieur 16 précité pour presser le siège bébé contre la banquette.

Selon l'invention et ainsi que cela ressort de la figure 1, une pince ouvrante 25 assure la fixation démontable de la sangle sous abdominale 14 sur une traverse 26 reliant près des coudes 20, 21 les éléments latéraux bas 18, 19 du piètement. Cette pince doit être ouvrante pour qu'en position d'ouverture (position représentée en trait plein sur la figure 4), la sangle 14 puisse être facilement engagée ou dégagée et qu'en position de fermeture (position représentée en trait mixte sur la figure 4), ladite sangle puisse être fermement pincée et immobilisée par rapport au piètement.

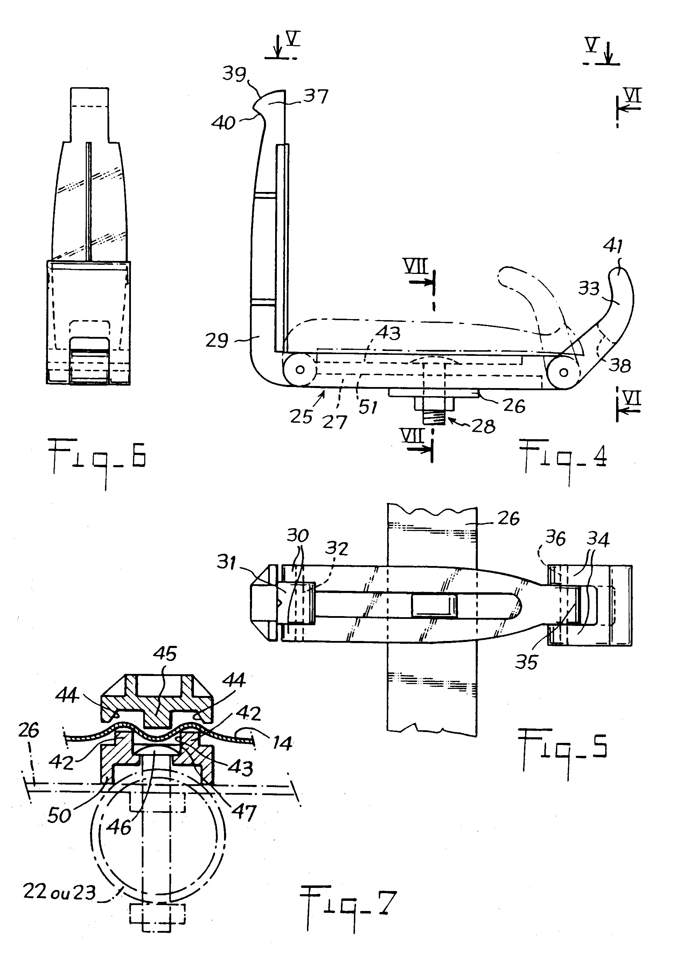

Dans l'exemple représenté sur les figures 4 à 7, la pince 25 est en matière plastique moulée. Elle comporte :
- un mors fixe 27 s'étendant perpendiculairement à la traverse 26 et fixé à celle-ci par un boulon 28 ou tout autre moyen approprié,
- un mors ouvrant 29 monté pivotant sur l'une des extrémités du mors fixe 27 ; à cet effet, le mors fixe 27 et le mors ouvrant 29 présentent respectivement une chape 30 et un oeilleton 31 emboîtés l'un dans l'autre et traversés par un axe d'articulation 32 (figure 5), la disposition inverse étant évidemment possible,
- et un levier de verrouillage 33 monté pivotant sur l'autre extrémité du mors fixe 27 par des moyens analogues aux précédents : une chape 34, un oeilleton 35 et un axe d'articulation 36, mais dans la disposition inverse.

En effet, l'oeilleton 35 est venu de moulage avec le mors fixe 27 et la chape 34 avec le levier 33. Les branches de cette chape sont relativement longues pour permettre l'emboîtement de celle-ci sur un bec terminal de verrouillage 37 venu de moulage avec le mors ouvrant 29. L'âme 38 de la chape 34 coopère alors avec une rampe 39 du bec pour assurer le pincement de la sangle 14 entre les deux mors 27 et 29 et se verrouille dans un cran 40 faisant suit au bec 37. L'âme 38 est prolongée par un doigt de manoeuvre 41.

Pour pincer la sangle 14, le mors fixe 27 présente deux bordures marginales 42 séparées par une rainure médiane 43 et le mors ouvrant 29 deux rainures marginales 44 séparées par une nervure médiane 45, les bordures 42 étant susceptibles de pénétrer lors de la fermeture de la pince dans la rainure 43 et la nervure 45 pénétrant alors dans la rainure 45 ; ainsi, et comme le montre la figure 7, la sangle 14 se trouve pincée en prenant un profil sinueux mieux apte encore à empêcher le glissement du siège le long de ladite sangle.

Il peut être avantageux d'immobiliser le boulon 28. A cet effet, la tête de vis 46 de ce boulon est circulaire et bombée et présente deux méplats. Elle est alors logée dans un évidement 47 délimité en creux dans le fond de la rainure 43.

Dans l'exemple représenté, la pince 25 est positionnée au milieu de la traverse 26 et à cet effet, le boulon 28 est engagé dans un trou de celle-ci.

Il peut être avantageux, pour adapter la fixation aux différentes configurations des ceintures de sécurité des véhicules, de régler le positionnement de la pince 25. Pour cela, divers moyens peuvent être mis en oeuvre. Par exemple, plusieurs trous peuvent être prévus dans la traverse 26 pour le passage du boulon 28 ou bien, la traverse peut présenter une lumière longitudinale à bords dentés comme une crémaillère, pour le logement d'un taquet formé en saillie sous le mors fixe 27 et traversé par la tige du boulon.

Les moyens décrits dans ce qui précède en se référant à la figure 1, permettent de bloquer le siège enfant sur la sangle sous abdominale 14.

L'enrouleur se dévide faiblement notamment lorsque l'enfant remue, de sorte que la sangle baudrier 15 prend du mou et que le siège enfant, bien que maintenu en position par la sangle sous-abdominale 14, tend à se soulever légèrement du côté du pène 12. Il revient à sa position, la sangle 15 se rembobinant, lorsque l'enfant cesse de remuer.

Il peut être avantageux de s'opposer, non seulement à la mobilité latérale, mais également à la tendance au soulèvement, sans pour autant neutraliser l'action de l'enrouleur en cas de choc.

A cet effet, la sangle baudrier 15 est immobilisée au-dessus du pène 12.

Suivant une première forme de réalisation illustrée par les figures 2 et 7, deux autres pinces 48 et 49, analogues à la pince 25, sont prévues. Leurs mors fixes 27 sont fixés sur les côtés des éléments ascendants inclinés 22 et 23 du piètement vers la coque 1, au voisinage des angles 16 précités. Ces pinces sont sélectivement utilisées en fonction de l'emplacement gauche ou droit occupé par le siège. En fait, la pince utilisée est celle qui est située à l'opposé du pène 12 et dans l'exemple représenté sur la figure 2, il s'agit de la pince gauche 48 étant donné que le siège occupe l'emplacement gauche de la banquette. Pour faciliter la fixation de ces pinces 48 et 49 sur les tubes 22 et 23 du piètement, le mors fixe 27 desdites pinces présente en-dessous (figures 4 et 7) deux bordures d'appui 50 séparées par un évidement longitudinal 51.

Suivant une deuxième forme de réalisation illustrée par la figure 3, une pince flottante unique 52 est prévue, son mors ouvrant 29 étant attaché par un lien souple 53 à la traverse 26 du piètement, de façon à être imperdable et toujours reliée au siège lors de ses manipulations. Dans ce cas, lorsque la sangle sous abdominale 14 est tendue en tirant sur le pène 12 par la sangle baudrier 15, la pince 52 est posée sur cette sangle baudrier près du pène pour empêcher la sangle sous abdominale 14 de se détendre si l'enrouleur se dévide un peu.

Il est bien évident que le piètement 4 peut ne pas être fabriqué en tube métallique. Il peut être en tôle métallique emboutie et ajourée, en matière plastique moulée, en aggloméré de particules de bois etc ... L'important est que les pinces 25 et 48, 49 ou 52 puissent être fixées ou montées aux emplacements indiqués dans ce qui précède et que le passage 8 des sangles soit ménagé.

## Revendications

1. Dispositif pour la fixation de sécurité d'un siège auto enfant sur une banquette arrière de véhicule automobile, le siège comportant un siège proprement dit faisant corps avec un piètement de support (4) conformé partiellement au moins en V dont la branche sensiblement horizontale (5) est destinée à reposer sur l'assise (6) de la banquette, tandis que la branche sensiblement verticale (7) de ce piètement et le dos du siège proprement dit sont appliqués contre le dossier de la banquette par une ceinture de sécurité (9) du véhicule à enrouleur auto-bloquant, ceinture qui traverse un passage (8) ménagé entre le siège proprement dit et ledit piètement (4) de façon que la sangle sous-abdominale (14) de ladite ceinture s appuie sur la branche sensiblement horizontale (5) du piètement (4) et que la sangle baudrier (15) de cette ceinture s'appuie contre le haut (16) d'un bord de la branche sensiblement verticale du piètement (4) et près du siège proprement dit lorsque le pène (12) coulissant sur la ceinture à la limite des deux sangles est verrouillé dans la boucle (13) attachée au véhicule,
caractérisé en ce que le siège proprement dit est constitué d'une coque et en ce qu'une pince ouvrante (25) est fixée le long d'une traverse postérieure basse (26) du piètement (4) pour prendre la sangle sous-abdominale (14) et la bloquer après positionnement latéral correct du siège sur la banquette (6), la fixation de ladite pince (25) étant réglable afin de s'adapter aux différentes configurations de ceintures des véhicules.

2. Dispositif selon la revendication 1, caractérisé en ce qu'une deuxième pince (48 ou 49 ; 52) est prévue pour prendre la sangle baudrier (15) au-dessus du pène (12).

3. Dispositif selon la revendication 2, caractérisé en ce que la deuxième pince (52) est indépendante du siège, mais attachée à celui-ci par un lien (53) pour être imperdable et inséparable.

4. Dispositif selon la revendication 2, caractérisé en ce que la deuxième pince est en deux exemplaires (48, 49) montés sur les côtés de la branche sensiblement verticale (7) du piètement (4), près de la coque (1).

## Claims

1. A safety fixing device for fixing a child's car seat on a backseat of a car, the child's seat comprising a seat per se engaged on a supporting stand (4) at least partially in the form of a V having one branch (5) which is substantially horizontal and intended to rest on the seat portion (6) of the backseat, while the substantially vertical branch (7) of said stand and the back of the seat per se are applied against the back of the backseat by a car seatbelt (9) having a locking wind-in spool, the belt going through a passage (8) provided between said seat per se and said stand (4) in such a manner that the lap strap (14) of said belt bears against the substantially horizontal branch (5) of the stand (4) and the shoulder strap (15) of said belt bears against the top (16) of an edge of the substantially vertical branch of the stand (4) and the seat per se when the bolt (12) sliding along the belt to the limit of the two straps is locked in the buckle (13) attached to the vehicle, the device being characterized in that the seat per se is constituted by a shell and in that an openable clamp (25) is mounted along a low rear cross-member (26) of the stand (4) in order to engage the lap strap (14) and lock it in place after the child's seat has been properly positioned laterally on the backseat (6), the fixing of the said clamp (25) being adjustable so as to adapt to various configurations of vehicle belts.

2. A device according to claim 1, characterized in that a second clamp (48 or 49; 52) is provided to take the shoulder strap (15) above the bolt (12).

3. A device according to claim 2, characterized in that the second clamp (52) is independent from the child's seat, but is attached thereto by a lanyard (53) in order to make it unloseable and inseparable.

4. A device according to claim 2, characterized in that the second clamp is provided in two examples (48, 49) mounted on the sides of the substantially vertical branches (7) of the stand (4) close to the shell (1).

## Patentansprüche

1. Vorrichtung zur Sicherungsbefestigung eines Kinderautositzes auf der hinteren Sitzbank eines Kraftfahrzeuges, wobei der Sitz einen Sitz im eigentlichen Sinne aufweist, der ein Bauteil bildet zusammen mit einem Tragegestell (4), das mindestens teilweise einer V-Form entspricht, deren im wesentlichen horizontaler Arm (5) dazu bestimmt ist, auf der Sitzfläche (6) der Sitzbank zu ruhen, während der im wesentlichen vertikale Arm (7) dieses Gestells und der Rücken des Sitzes im eigentlichen Sinne an der Rückenlehne der Sitzbank durch einen selbstsperrenden Aufwickel-Sicherheitsgurt (9) des Fahrzeugs befestigt sind, wobei dieser Gurt durch einen Durchlaß (8) hindurchläuft, der zwischen dem Sitz im eigentlichen Sinne und dem genannten Gestell (4) so eingebracht ist, daß der Beckenriemen (14) des genannten Gurtes sich auf dem im wesentlichen horizontalen Arm (5) des Gestells (4) abstützt und daß der Schrägschulterriemen (15) dieses Gurtes sich gegen die Oberseite (16) eines Randes des im wesentlichen vertikalen Arms des Gestells (4) und nahe dem Sitz im eigentlichen Sinne abstützt, wenn der Riegel (12), der auf dem Gurt an der Grenze der beiden Riemen verschieblich ist, in das Gurtschloß (13) eingerastet ist, das am Fahrzeug angebracht ist,
dadurch **gekennzeichnet,** daß der Sitz im eigentlichen Sinne von einer Schale gebildet ist und daß eine zu öffnende Klemme (25) längs der unteren hinteren Traverse (26) des Gestells (4) befestigt ist, um den Beckengurt (14) aufzunehmen und ihn nach der korrekten seitlichen Positionierung des Sitzes auf der Sitzbank (6) festzulegen, wobei die Befestigung der genannten Klemme (25) einstellbar ist, um sich an die unterschiedlichen Ausbildungen der Fahrzeuggurte anzupassen.

2. Vorrichtung nach Anspruch 1, dadurch **gekennzeichnet,** daß eine zweite Klemme (48 oder 49; 52) vorgesehen ist, um den Schrägschulterriemen (15) über den Riegel (12) zu ergreifen.

3. Vorrichtung nach Anspruch 2, dadurch **gekennzeichnet,** daß die zweite Klemme (52) unabhängig ist vom Sitz, aber an diesem mit einem Band bzw. Verbindungsteil (53) angebracht ist, um unverlierbar und unabtrennbar zu sein.

4. Vorrichtung nach Anspruch 2, dadurch **gekennzeichnet,** daß die zweite Klemme in zwei Exemplaren (48, 49) vorliegt, die auf den Seiten des im wesentlichen vertikalen Arms (7) des Gestells (4) nahe der Schale (1) angebracht sind.
